# EUROPEAN PATENT APPLICATION

(11) **EP 2 866 012 A1**
(43) Date of publication of application: **29.04.2015**
(21) Application number: 13189820.7
(22) Date of filing: 23.10.2013
(51) Int. Cl.: G01L 9/00, G01K 7/16, G01K 1/26

(54) **A sensor element comprising a constraining layer**

(71) Applicant: Danfoss A/S, 6430 Nordborg (DK)
(72) Inventor: Matzen, Steen Moellebjerg, 6470 Sydals (DK); Chiriaev, Serguei, 6430 Nordborg (DK)

(57) **Abstract**

A sensor element (4) comprising a diaphragm (6), a first electrically insulating layer (7), a constraining layer (8), and a sensor layer (10), said sensor layer comprising one or more sensing components, forming a layered structure. The first electrically insulating layer (7) is arranged between the diaphragm (6) and the constraining layer (8), and the constraining layer (8) is arranged between the first electrically insulating layer (7) and the sensing components (10). The first electrically insulating layer (7) is made from a material which has a Young's modulus which is significantly lower than a Young's modulus of the material of the diaphragm (6), and which is significantly lower than a Young's modulus of the material of the constraining layer (8). Thereby relaxation of strain in the first electrically insulating layer (7) is constrained, and signal drift of the sensor element (4) is minimised.

## Description

### FIELD OF THE I NVENTI ON

The present invention relates to a sensor element, e.g. forming part of a pressure sensor or a temperature sensor. More particularly, the sensor element of the present invention reduces the risk of signal drift of the sensor.

### BACKGROUND OF THE I NVENTI ON

In some prior art pressure sensor elements, e.g. thin film pressure sensors, a sensor layer comprising sensing components is electrically insulated from a metal diaphragm by means of an electrically insulating layer arranged between the diaphragm and the sensing components. Since the diaphragm and the insulating layer are made from different materials, such an arrangement causes mechanical strain to be introduced in the insulating layer as well as in the diaphragm. The introduced strain originates from the difference in structure and chemical composition of the diaphragm material and the material of the insulating layer, and from differences in coefficients of thermal expansions between these materials.

When a sensor element as described above operates at elevated temperatures, the strain introduced in the insulating layer relaxes, and this relaxation results in drift in the strain of the sensing components. Thereby a drift in the sensor signal generated by the sensor element occurs. This drift in sensor signal may be significant, and may even reach unacceptable levels. This limits the sensor reliability as well as the operational temperature range of the sensor element.

EP 0 317 664 discloses a measuring cell, in particular for relative or differential pressure measurements. The measuring cell is provided with an insulating clamp part, fixed to base pins of the measuring cell, for bracing a mounting part of the measuring cell facing away from the measuring diaphragm against the carrier plate. The clamp part ensures that parasitic stress in the diaphragm is avoided.

### DESCRIPTION OF THE INVENTION

It is an object of embodiments of the invention to provide a sensor element which is capable of providing reliable measurements.

It is a further object of embodiments of the invention to provide a sensor element in which signal drift of the sensor element is reduced as compared to prior art sensor elements.

The invention provides a sensor element comprising:
- a diaphragm,
- a first electrically insulating layer,
- a constraining layer, and
- a sensor layer, said sensor layer comprising one or more sensing components,
wherein the diaphragm, the first electrically insulating layer, the constraining layer and the sensing components form part of a layered structure, where the first electrically insulating layer is arranged between the diaphragm and the constraining layer, and the constraining layer is arranged between the first electrically insulating layer and the sensing components, and wherein the first electrically insulating layer is made from a material which has a Young's modulus which is significantly lower than a Young's modulus of the material of the diaphragm, and which is significantly lower than a Young's modulus of the material of the constraining layer.

In the present context the term 'sensor element' should be interpreted to mean an element which is capable of sensing a physical quantity, such as temperature, pressure, strain, humidity, etc., and of generating a signal which is indicative of the magnitude of the sensed physical quantity.

The sensor element comprises a diaphragm, a first electrically insulating layer, a constraining layer and a sensor layer comprising one or more sensing components. The sensing component(s) is/are selected in such a manner that changes in the physical quantity, which it is intended to measure by means of the sensor element, affects the sensing component(s) in such a manner that a response of the sensing component(s) reflects these changes. Thus, the sensor layer, including the sensing component(s), is the part of the sensor element which performs the sensing.

The diaphragm, the first electrically insulating layer the constraining layer and the sensing components form a layered structure, where the first electrically insulating layer is arranged between the diaphragm and the constraining layer, and the constraining layer is arranged between the first electrically insulating layer and the sensing components. Thus, the sequence of the layers of the layered structure is as follows: Diaphragm, first electrically insulating layer, constraining layer and sensing components. It is, however, not ruled out that additional layers could be arranged in the layered structure, as long as the mutual sequence of these four layers is as described above.

Thus, the first electrically insulating layer electrically insulates the sensing components of the sensor layer from the diaphragm.

The first electrically insulating layer is made from a material which has a Young's modulus which is significantly lower than a Young's modulus of the material of the diaphragm. Furthermore, the Young's modulus of the material of the first electrically insulating layer is also significantly lower than a Young's modulus of the material of the constraining layer. Thus, the material of the first insulating layer is significantly less stiff than the material of the diaphragm, as well as the material of the constraining layer. Since the first insulating layer is arranged between the diaphragm and the constraining layer, the first insulating layer is 'sandwiched' between two layers having a significantly higher Young's modulus, i.e. two layers which are made from materials which are much stiffer. This has the consequence that the first electrically insulating layer is constrained, and thereby the strain relaxation in the first electrically insulating layer is retarded. This follows from the fact that, at a given strain, the mechanical forces (the mechanical stress) that drive the relaxation of the strain in the first electrically insulating layer are proportional to the Young's modulus of the material of the first electrically insulating layer, and the mechanical forces that constrain the relaxation of the strain in the first electrically insulating layer are proportional to the Young's moduli of the materials of the diaphragm and the constraining layer. Thus, the forces driving the relaxation of the strain in the first electrically insulating layer are significantly smaller than the forces that constrain the relaxation.

Since the relaxation of strain in the first electrically insulating layer is constrained as described above, signal drift of the sensor element is substantially prevented.

Furthermore, since the constraining layer is arranged between the first electrically insulating layer and the sensing components, it is ensured that the sensing components are mounted onto a structure in which relaxation of strain is constrained, and thereby it is efficiently ensured that signal drift of the sensing components is prevented.

On the contrary, in prior art sensor elements, where a constraining layer is not provided, the relaxation of strain in the electrically insulating layer is fully constrained only at one side, i.e. at the interface between the diaphragm and the electrically insulating layer. Atomic bonds through this interface can restrict displacements of atoms in the electrically insulating layer, and thus the relaxation of strain in the electrically insulating layer. A large part of the opposite side of the electrically insulating layer is, however, free of any constraints, and thus free to relax, since the sensing components will normally only occupy a relatively small part of the surface of the electrically insulating layer. Furthermore, the sensing components will often be made from a material which is not sufficiently stiff to prevent strain relaxation in the parts of the surface of the electrically insulating layer which are actually occupied by the sensing components. Thus, relaxation of strain in the electrically insulating layer occurs, leading to signal drift of the sensor element during operation.

The constraining layer may be made from a material which has a Young's modulus which is substantially equal to a Young's modulus of the material of the diaphragm. According to this embodiment, the Young's moduli of the materials of the two layers, which the first electrically insulating layer is arranged between, are substantially equal. This efficiently ensures that relaxation of strain in the first electrically insulating layer is prevented, as described above. For instance, the diaphragm and the constraining layer could be made from the same material, thereby having identical Young's moduli. Alternatively, the diaphragm and the constraining layer could be made from different materials having identical or comparable Young's moduli. As another alternative, the material of the diaphragm may have a Young's modulus which differs significantly from the Young's modulus of the material of the constraining layer, as long as it is ensured that they are both significantly higher than the Young's modulus of the material of the electrically insulating layer.

The diaphragm may be made from a material having a Young's modulus within the interval 150 GPa to 250 GPa, such as within the interval 170 GPa to 230 GPa, such as within the interval 180 GPa to 220 GPa, such as approximately 200 GPa, and the constraining layer may be made from a material having a Young's modulus within the interval 150 GPa to 250 GPa, such as within the interval 170 GPa to 230 GPa, such as within the interval 180 GPa to 220 GPa, such as approximately 200 GPa. For instance, the diaphragm and/or the constraining layer may be made from stainless steel or Nickel.

Similarly, the first electrically insulating layer may be made from a material having a Young's modulus within the interval 40 GPa to 150 GPa, such as within the interval 50 GPa to 130 GPa, such as within the interval 60 GPa to 100 GPa, such as approximately 70 GPa. For instance, the first electrically insulating layer may be made from Silicon dioxide, SiO₂.

The sensor element may further comprise a second electrically insulating layer, said second electrically insulating layer being arranged between the constraining layer and the sensing components. According to this embodiment, the constraining layer is electrically insulated from the sensing components by means of the second electrically insulating layer. This allows the constraining layer to be made from an electrically conductive material, e.g. a metal. This is an advantage, since the material of the constraining layer can thereby be selected purely for its constraining properties, without considering whether or not the material is electrically insulating.

Thus, the constraining layer may be made from a metal or an alloy, such as from Nickel or a Nickel alloy.

According to one embodiment, the constraining layer may be made from a metal or an alloy of a metal which is used for the sensing component(s) of the sensor layer. This makes it possible to manufacture the sensor element in an efficient manner, because new materials and processing facilities are not required, as compared to manufacturing of prior art sensor elements, in order to provide the constraining layer. Thus, existing manufacturing equipment can be used.

The sensing component(s) of the sensor layer may form a bridge structure, such as a Wheatstone bridge. A Wheatstone bridge is capable of sensing deflections of a flexible wall having the Wheatstone bridge mounted thereon or arranged adjacent thereto, in this case the diaphragm. Thus, in the case that the sensing components of the sensor layer form a Wheatstone bridge, the sensor element may advantageously form part of a pressure sensor, where a pressure level determines deflections of the diaphragm.

The sensor element may further comprise a head part, and the diaphragm may be mounted on or form part of the head part. In the present context the term 'head part' should be interpreted to mean a structural part of the sensor element. Furthermore, the head part may be adapted to be connected to external parts, thereby allowing the sensor element to be arranged in a sensor and/or to be attached at a position where it is desired to measure a given physical quantity.

The sensor element may form part of a pressure sensor. This may, e.g., be obtained when the sensing component(s) of the sensor layer form(s) a Wheatstone bridge, as described above. When the diaphragm is positioned in contact with a medium of which it is desired to measure the pressure, changes in the pressure of the medium causes changes in a deflection of the diaphragm. The Wheatstone bridge is capable of detecting such deflections, and thereby a measure for the pressure prevailing in the medium can be obtained.

As an alternative, the sensor element may form part of a temperature sensor. This may, e.g., be obtained if at least one of the sensing component(s) of the sensor layer is a resistive component, such as a resistor, since a simple resistor can be used for sensing a temperature in a region where the sensor element is arranged.

As another alternative, the sensor element may form part of any other suitable kind of sensor, such as a thermocouple.

### BRIEF DESCRIPTION OF THE DRAWINGS

The invention will now be described in further detail with reference to the accompanying drawings in which
Fig. 1 is an exploded view of a sensor comprising a sensor element according to an embodiment of the invention,
Fig. 2 is a perspective view of the sensor element of the sensor of Fig. 1 ,
Fig. 3 is a cross sectional view of a prior art sensor element,
Fig. 4 is a cross sectional view of sensor element according to a first embodiment of the invention, and
Fig. 5 is a cross sectional view of a sensor element according to a second embodiment of the invention.

### DETAILED DESCRIPTION OF THE DRAWINGS

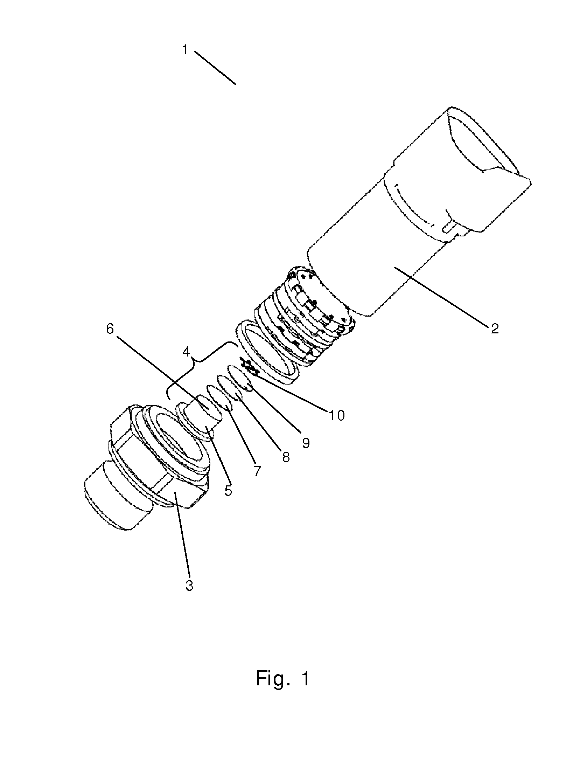

Fig. 1 is an exploded view of a sensor 1 , in the form of a pressure sensor. The sensor 1 comprises a first housing part 2 and a second housing part 3, form ing a connector to a fluid medium, the housing parts 2, 3 being arranged to enclose a sensor element 4.

The sensor element 4 comprises a head part 5 carrying a diaphragm 6, a first electrically insulating layer 7, a constraining layer 8, a second electrically insulating layer 9, and a sensor layer 10 in the form of a number of sensing components forming a Wheatstone bridge. The first electrically insulating layer 7 is arranged between the diaphragm 6 and the constraining layer 8, and the constraining layer 8 is arranged between the first electrically insulating layer 7 and the sensor layer 10, with the second electrically insulating layer 9 being arranged between the constraining layer 8 and the sensor layer 10. Thus, when the sensor element 4 is assembled, the diaphragm 6, the first electrically insulating layer 7, the constraining layer 8, the second electrically insulating layer 9 and the sensor layer 10 form a layered structure.

When the sensor 1 is connected to a fluid medium, the diaphragm 6 is subjected to the pressure of the fluid medium. Changes in the pressure of the fluid medium cause the diaphragm 6 to deflect, in such a manner that a high pressure causes a high deflection and a low pressure causes a smaller deflection. Accordingly, the deflection of the diaphragm 6 is a measure for the pressure of the fluid medium. Since the sensor layer 10 is mounted on the diaphragm 6, via the first electrically insulating layer 7, the constraining layer 8 and the second electrically insulating layer 9, the Wheatstone bridge of the sensor layer 10 is also deflected by the pressure of the fluid medium. The Wheatstone bridge is capable of detecting this deflection in a manner known per se, and thereby the sensor 1 can be used for measuring the pressure of the fluid medium.

The material of the first electrically insulating layer 7 has a Young's modulus which is significantly lower than the Young's modulus of the material of the diaphragm 6. Furthermore, the Young's modulus of the material of the first electrically insulating layer 7 is significantly lower than the Young's modulus of the material of the constraining layer 8. Thereby the first electrically insulating layer 7 is arranged between two layers 6, 8 which are made from materials, which are significantly stiffer than the material of the first electrically insulating layer 7. As described above this has the effect that relaxation of strain in the first electrically insulating layer 7 during operation of the sensor 1 is constrained, and thereby signal drift of the sensor 1 is prevented, or at least significantly reduced.

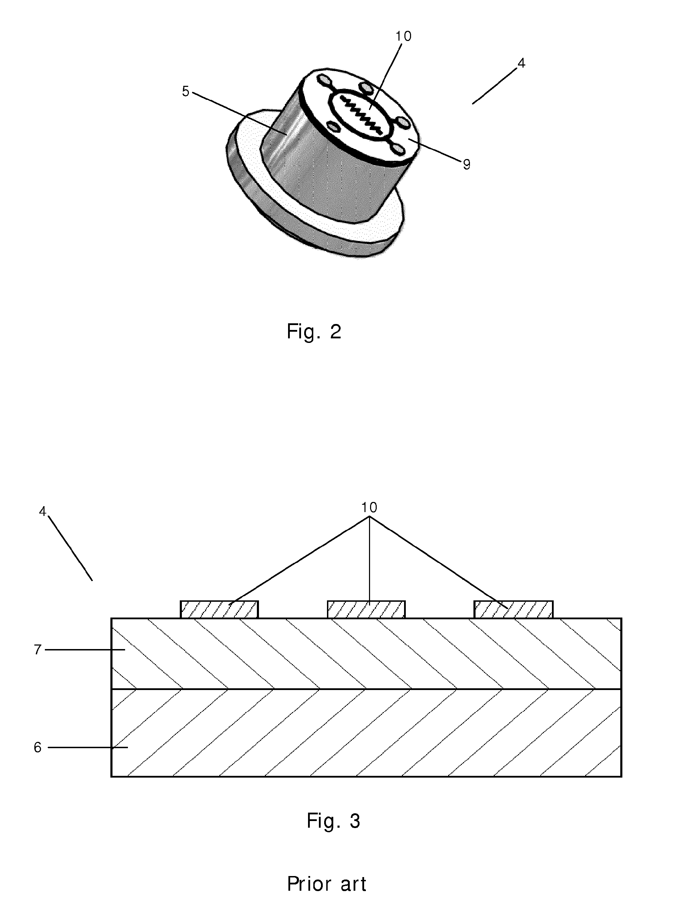

Fig. 2 is a perspective view of the sensor element 4 of the sensor 1 of Fig. 1. In n Fig. 2 the sensor element 4 is assembled, i.e. the first electrically insulating layer 7 the constraining layer 8, the second electrically insulating layer 9 and the sensing components of the sensor layer 10 have been mounted on the diaphragm 6 of the head part 5 in a layered structure. Only the second electrically insulating layer 9 and the sensor layer 10 are visible in Fig. 2, the remaining layers being hidden underneath the second electrically insulating layer 9.

Fig. 3 is a cross sectional view of a prior art sensor element 4. The sensor element 4 comprises an electrically insulating layer 7 arranged between a diaphragm 6 and a sensor layer 10 comprising a number of sensing components. Thus, the diaphragm 6, the electrically insulating layer 7 and the sensor layer 10 form a layered structure, and the electrically insulating layer 7 provides electrical insulation between the diaphragm 6 and the sensing components of the sensor layer 10.

The diaphragm 6 and the electrically insulating layer 7 are made from different materials. Therefore the prior art sensor element 4 of Fig. 3 is characterised by strain in the diaphragm 6 as well as in the electrically insulating layer 7. The strain originates from differences in structure and chemical composition of the material of the diaphragm 6 and the material of the electrically insulating layer 7, and from differences in coefficients of thermal expansion of the materials. The latter is sometimes referred to as thermal mismatch strain.

When the sensor element 4 operates at elevated temperatures, large strain in the electrically insulating layer 7 relaxes, and this relaxation results in drift in the strain of the sensing components of the sensor layer 10. This, in turn, results in signal drift of the sensor signal and limits the reliability of the sensor element 4 and the operational temperature range of the sensor element 4.

The relaxation of strain in the electrically insulating layer 7 can be explained in the following manner. Since the sensing components of the sensor layer 10 are arranged directly onto the electrically insulating layer 7, the relaxation of the strain in the electrically insulating layer 7 is fully constrained only at one of its surfaces, i.e. at the interface between the diaphragm 6 and the electrically insulating layer 7. Atomic bonds through this interface can restrict displacements of atoms in the electrically insulating layer 7, and thus the relaxation of strain in the electrically insulating layer 7. However, the opposite side of the electrically insulating layer 7 is constrained to a much lower extent, since the sensing components of the sensor layer 10 only occupy a relatively small part of this side of the electrically insulating layer 7. Furthermore, the sensing components will often be made from a material which is not sufficiently stiff to prevent strain relaxation in areas which are occupied by the sensing components. Therefore relaxation of stress in the electrically insulating layer 7 can occur via this surface of the electrically insulating layer 7.

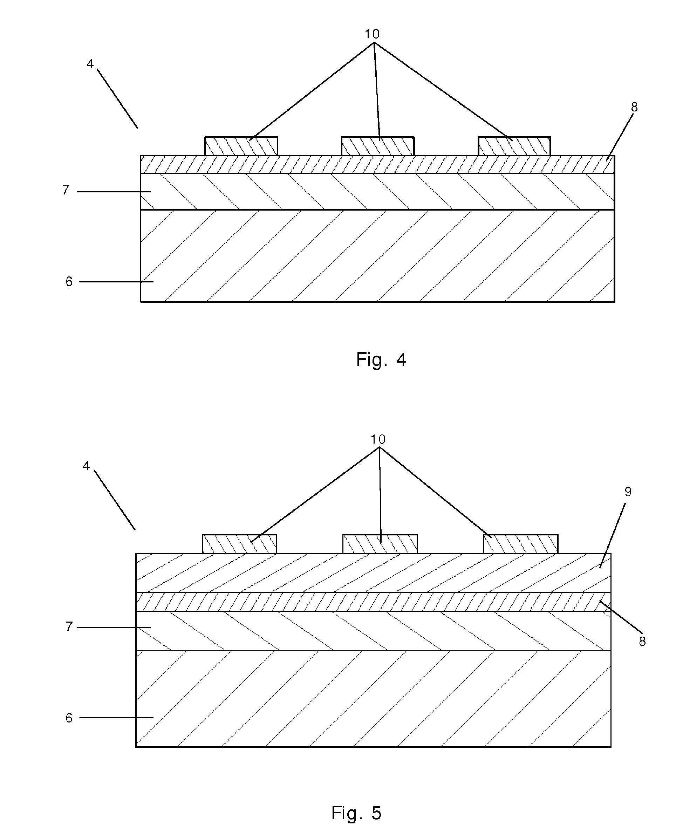

Fig. 4 is a cross sectional view of a sensor element 4 according to a first embodiment of the invention. The sensor element 4 of Fig. 4 is similar to the prior art sensor element 4 of Fig. 3 in the sense that the sensor element 4 comprises a diaphragm 6, a first electrically insulating layer 7 and a sensor layer 10 comprising a number of sensing components, and in the sense that the diaphragm 6, the first electrically insulating layer 7 and the sensor layer 10 form part of a layered structure.

The sensor element 4 of Fig. 4 further comprises a constraining layer 8 arranged between the first electrically insulating layer 7 and the sensor layer 10. Accordingly, the first electrically insulating layer 7 is arranged between the diaphragm 6 and the constraining layer 8.

The first electrically insulating layer 7 is made from a material which has a Young's modulus which is significantly lower than the Young's modulus of the material of the diaphragm 6. Furthermore, the Young's modulus of the material of the first electrically insulating layer 7 is significantly lower than the Young's modulus of the material of the constraining layer 8. Accordingly, the first electrically insulating layer 7 is 'sandwiched' between two layers 6, 8 which are both made from materials with a significantly higher Young's modulus than the material of the first electrically insulating layer 7.

The constraining layer 8 provides additional constrains capable of retarding strain relaxation in the first electrically insulating layer 7. These additional constraints originate from the interface between the first electrically insulating layer 7 and the constraining layer 8. The mechanical forces that drive relaxation of strain in the first electrically insulating layer 7 are proportional to the Young's modulus of the material of the first electrically insulating layer 7. On the other hand, the mechanical forces that constrain the relaxation of the strain in the first electrically insulating layer 7 are proportional to the Young's moduli of the materials of the diaphragm 6 and the constraining layer 8, respectively. Since the Young's modulus of the material of the first electrically insulating layer 7 is significantly lower than the Young's modulus of the diaphragm 6, as well as the Young's modulus of the material of the constraining layer 8, the forces constraining the relaxation of the strain in the first electrically insulating layer 7 are significantly larger than the forces that drive the relaxation of the strain in the first electrically insulating layer 7. Accordingly, the relaxation of the strain in the first electrically insulating layer 7 is retarded, thereby preventing, or at least significantly reducing, signal drift of the sensor element 4 during operation.

Fig. 5 is a cross sectional view of a sensor element 4 according to a second embodiment of the invention. The sensor element 4 of Fig. 5 is very similar to the sensor element 4 of Fig. 4, and it will therefore not be described in detail here.

The sensor element 4 of Fig. 5 further comprises a second electrically insulating layer 9 arranged between the constraining layer 8 and the sensor layer 10. This allows the material of the constraining layer 8 to be electrically conductive. Accordingly, the material of the constraining layer 8 can be selected purely for its constraining properties.

## Claims

1. A sensor element (4) comprising:
- a diaphragm (6),
- a first electrically insulating layer (7),
- a constraining layer (8), and
- a sensor layer (10), said sensor layer comprising one or more sensing components,
wherein the diaphragm (6), the first electrically insulating layer (7), the constraining layer (8) and the sensing components (10) form part of a layered structure, where the first electrically insulating layer (7) is arranged between the diaphragm (6) and the constraining layer (8), and the constraining layer (8) is arranged between the first electrically insulating layer (7) and the sensing components (10), and wherein the first electrically insulating layer (7) is made from a material which has a Young's modulus which is significantly lower than a Young's modulus of the material of the diaphragm (6), and which is significantly lower than a Young's modulus of the material of the constraining layer (8).

2. A sensor element (4) according to claim 1 , wherein the constraining layer (8) is made from a material which has a Young's modulus which is substantially equal to a Young's modulus of the material of the diaphragm (6).

3. A sensor element (4) according to claim 1 or 2, wherein the diaphragm (6) is made from a material having a Young's modulus within the interval 150 GPa to 250 GPa, and the constraining layer (8) is made from a material having a Young's modulus within the interval 150 GPa to 250 GPa.

4. A sensor element (4) according to any of the preceding claims, wherein the first electrically insulating layer (7) is made from a material having a Young's modulus within the interval 40 GPa to 150 GPa.

5. A sensor element (4) according to any of the preceding claims, further comprising a second electrically insulating layer (9), said second electrically insulating layer (9) being arranged between the constraining layer (8) and the sensing components (10).

6. A sensor element (4) according to any of the preceding claims, wherein the constraining layer (8) is made from a metal or an alloy.

7. A sensor element (4) according to claim 6, wherein the constraining layer (8) is made from Nickel or a Nickel alloy.

8. A sensor element (4) according to claim 6 or 7, wherein the constraining layer (8) is made from a metal or an alloy of a metal which is used for the sensing component(s) of the sensor layer (10).

9. A sensor element (4) according to any of the preceding claims, wherein the sensing component(s) of the sensor layer (10) form a bridge structure.

10. A sensor element (4) according to claim 9, wherein the sensing component(s) of the sensor layer (10) form a Wheatstone bridge.

11. A sensor element (4) according to any of the preceding claims, further comprising a head part (5), wherein the diaphragm (6) is mounted on or forms part of the head part (5).

12. A sensor element (4) according to any of the preceding claims, wherein the sensor element (4) forms part of a pressure sensor.

13. A sensor element (4) according to any of claims 1-11, wherein the sensor element (4) forms part of a temperature sensor.
